# EUROPEAN PATENT SPECIFICATION

(11) **EP 4 541 713 B1**
(45) Date of publication and mention of the grant of the patent: **01.04.2026**
(21) Application number: 23315391.5
(22) Date of filing: 17.10.2023
(51) Int. Cl.: B64C 27/50, B64F 5/50, B64C 27/00

(54) **A GROUND SERVICE DEVICE FOR SECURING ROTOR BLADES OF A ROTARY-WING AIRCRAFT**
BODENWARTUNGSVORRICHTUNG ZUR SICHERUNG VON ROTORBLÄTTERN EINES DREHFLÜGELFLUGZEUGS
DISPOSITIF DE SERVICE AU SOL POUR FIXER DES PALES DE ROTOR D'UN AÉRONEF À VOILURE TOURNANTE

(43) Date of publication of application: 23.04.2025
(73) Proprietor: AIRBUS HELICOPTERS DEUTSCHLAND GmbH, 86609 Donauwörth (DE); Airbus Helicopters, 13725 Marignane Cedex (FR)
(72) Inventor: Fink, Axel, 86609 DONAUWÖRTH (DE); Abruzzese, Nicolas, 13008 MARSEILLE (FR)
(74) Representative: GPI Brevets

(56) References cited:
- JP-B2- 5 528 307
- US-A1- 2004 118 971
- US-A1- 2005 211 825
- US-B1- 6 783 327

## Description

The present technology relates to a ground service device for securing rotor blades of a multi-blade rotor of a rotary-wing aircraft in a non-operational mode of the rotary-wing aircraft. The present technology also relates to a connecting interface on a rotary-wing aircraft that is adapted for receiving such a ground service device and to a ground service system comprising such a ground service device and such a connecting interface on the rotary-wing aircraft.

The rotor blades of a multi-blade rotor of a rotary-wing aircraft are frequently designed to be able of being folded back and stowed in a side-by side position in line with the fuselage of the rotary-wing aircraft to reduce the storage volume for air and ship transportability. In a folded position, an external support equipment must secure the blades to avoid abnormal loading on the blade root attachment to the rotor head, and to avoid that moving blades injure people in the vicinity or damage other blades or the airframe, which is especially likely to happen under strong wind conditions.

The external support equipment is usually designed to locally catch the blade and to transfer wind and inertia loads that are being excited on the folded rotor blade into the airframe. As a result, the airframe is generally implemented with corresponding provisions such as internal or external brackets for the fixation of the external support equipment and adequate structural reinforcements to integrate the fixations and properly transfer the interface loads.

Depending on the magnitude and direction of the interface load vectors, the reinforcements often require an increase of the local thickness of the primary skin and an implementation of back-side structural stiffeners such as frames and/or intercostals. The additional brackets and stiffening means lead to an increase of the structural weight of the rotary-wing aircraft. The weight increase can be considerable if not well designed, and negatively affect the airframe's weight efficiency, weight, and balance performance, which is especially true for additional masses allocated behind the center of gravity of the rotary-wing aircraft.

A wide variety of external support equipment is known. Most of the known external support equipment uses clamps. A clamp fixes rotor blades without compression to avoid damage to the rotor blades. The clamps are often carried by a pole, which is individually attached to the airframe of the rotary-wing aircraft at dedicated fixed provisions, which are typically allocated at the top and lateral regions of the airframe. Attaching each pole individually can lead to a considerable mass of fixed provisions on the airframe, which is especially true when several rotor blades are being folded.

Document US 6,695,253 B1 describes that to fold/unfold blades of a rotor, at least one variable-length linear actuator is removably attached to two blades locked in the flight position. A first blade is unlocked, and the actuator is actuated to vary its length and bear against the other blade which remains locked. This causes the first blade to pivot about its pivot axis and move to a folded position where it is again locked. The other blade is then unlocked and the actuator once again actuated but this time bearing against the first blade. In this way the other blade pivots into the folded position where it is again locked. The two locked folded blades may be connected to each other by a link rod. Rotors with three blades, four blades, five and six blades can be folded/unfolded with only two actuators.

Document US 4,712,978 A describes a folding mechanism at the rotor blade root fixation. The blades rest on a cradle in a folded position. The drawings show the cradle with individual strut elements that are directly fixed into the airframe structure at several upper and side fixation points.

Document US 3,133,715 A describes an apparatus for supporting and holding folded rotor blades of helicopters, comprising a clip clamping the blade and a support, which connects the clip to the fuselage. Each blade is individually attached to the structure by the support. The support fixations to the fuselage are shown allocated on top of the tail boom as well as on top and to the sides of the center fuselage. The supports are not self-stable, meaning that they need the support of the clamped blades to be rigid.

Other known external support equipment uses a truss rack, which groups two blade supports, one at each side of the rotary-wing aircraft. Such a truss rack is usually arranged above the airframe and attached to the airframe at three or more points allocated at the upper or lateral regions of the rotary-wing aircraft. Therefore, the use of a truss rack has important drawbacks in terms of accessibility and handling, requiring the heavy rack to be lifted above the fuselage and fixed at both lateral sides of the fuselage. The allocation of fixations on the lateral portions of the airframe lead to lateral loads acting on the airframe side shells, hence requiring back-side stiffening members such as frames or intercostals supporting the shell and reacting the transverse loads. Special attention has to be paid on the adjustability of the rack's fixations in order to cope with tolerances and ensure a stress-free fixation.

Document EP 0 613 443 B1 describes a procedure of folding the main rotor blades of a helicopter. A forward and an aft support rack is removably fixed onto the structure at pinned brackets. The drawings show the brackets being allocated on the top of the tail boom and nose structure. The blades are folded, placed on top of the support racks, and clamped with a cradle. Each support rack holds two blades simultaneously.

Other blade restraint systems for restraining a blade of a helicopter are described in documents JP 5 528 307 B2, US 2004/0118971 A1, and US 2005/0211825 A1 while document US 6 783 327 B1 describes a blade fold hinge unit for a helicopter.

All cited prior art documents describe solutions that require access to installation points that are allocated at the upper regions of the rotary-wing aircraft, which are usually difficult to reach. Furthermore, due to the installation points at the upper regions of the rotary-wing aircraft, the respective apparatus that is used for securing the folded rotor blades needs to be lifted to the upper regions. However, the lifting of the respective apparatus above the rotary-wing aircraft bears the risk of hitting and damaging the rotary-wing aircraft. Moreover, the fixation points and stabilizing structures on the airframe increases the weight of the rotary-wing aircraft and remains with the rotary-wing aircraft in operational mode, thereby decreasing in-flight fuel efficiency of the rotary-wing aircraft.

Based on the limitations and drawbacks of the prior art, an objective is to provide a new ground service device for securing rotor blades of a multi-blade rotor of a rotary-wing aircraft that can easily be installed to the rotary-wing aircraft without a specific positioning tool. The ground service device should be attachable to the airframe of the rotary-wing aircraft such that lateral loads to the airframe are avoided and no additional supporting members are required on the airframe. The ground service device should also be conceived such that the risk of damage to the rotary-wing aircraft is minimal during the installation process.

These objectives are solved by a ground service device comprising the features of claim 1. More specifically, a ground service device for securing rotor blades of a multi-blade rotor of a rotary-wing aircraft in a non-operational mode of the rotary-wing aircraft comprises: a rack that is releasably attachable to first, second, third, and fourth receiver mounts of the rotary-wing aircraft and comprises: a rack base, a first strut that is pivotally attached to the rack base and adapted for releasably attaching the rack base with the first receiver mount, a second strut that is pivotally attached to the rack base and adapted for releasably attaching the rack base with the second receiver mount, a third strut that is pivotally attached to the rack base and adapted for releasably attaching the rack base with the third receiver mount, and an attachment device fixedly attached to the rack base that is adapted for releasably attaching the rack base with the fourth receiver mount below a lower shell of the rotary-wing aircraft, and clamps that are attached to the rack for releasably connecting the rotor blades with the first, second, third and fourth receiver mounts of the rotary-wing aircraft such that the rotor blades are secured in the non-operational mode of the rotary-wing aircraft.

The present ground service device for the support of main rotor blades can also be used together with tools other than clamps for the removable fixation of other kind of service equipment.

Illustratively, the rack base is allocated below the airframe and may have a triangular arrangement including a main beam and two diagonal beams. In some implementations, the rack also includes at least one lateral beam extending from the main beam upwardly at each side of the airframe. The lateral beams are used to attach poles. As a result, the rack is approached to the airframe and its attachments during a mounting process from below. The main beam and the lateral beams represent the main loaded member of the rack. The presented triangular arrangement of the rack base using straight, tubular beam members represents an exemplary arrangement. The fixation principle of the present ground service might be however applied on rack bases with other construction types e.g. using truss beams, curved beams or monocoque designs.

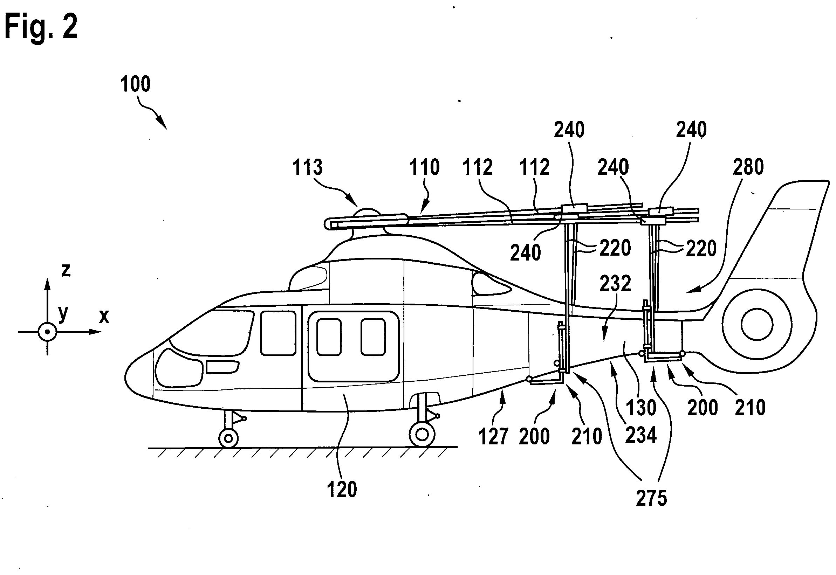

The fixation of the rack to the airframe is essentially allocated on the lower portion of the airframe and is composed of four fixation points: two lateral fixation points, one lower fixation point and one master fixation point. No fixation is allocated on top of the airframe. Three fixation points are essentially allocated at the same or nearly the same longitudinal position (i.e., along the longitudinal x-axis of Figure 2). A certain minor secondary longitudinal offset between the lateral and the lower fixation may ensure sufficient installation room for further elements of the arrangement. The fourth fixation represents a so-called master fixation which locally fixes the rack base in a vertical, longitudinal and transverse position. This master fixation is longitudinally distantly apart from the other fixation points. This primary offset distance might be in the order of 1/5 to 2 times the width of the airframe at that section.

Illustratively, the lateral fixations and the lower fixation are allocated close to the main beam of the rack, whereas the master fixation is allocated at the mutually interconnected extremities of the diagonal beams.

One strut interconnects the rack to the airframe at each of the two lateral fixations and the lower fixation, such that three strut elements (i.e., two lateral struts and one horizontal one) are used. At the center, master fixation point, the rack is directly interconnected to the airframe. The lateral struts are essentially arranged in vertical position (i.e., orientation angle of their axis less than 40° with respect to the vertical z-axis), and the horizontal strut is essentially oriented in horizontal position (i.e., orientation angle of the axis less than 40° with respect to the horizontal x-axis).

The fixation of the struts to the airframe may be achieved by means of dedicated fittings: The lateral struts are connected to lateral fittings and the lower strut is connected to a lower fitting. The master fixation implements a dedicated airframe master fitting. All fittings may be riveted or screwed to the airframe shells.

The translations at both lateral fixations, at the lower fixations, and at the master fixation are blocked. In contrast thereto, rotations are free and consequently no moments can be transferred. In some implementations, this kinematic behavior is achieved by the use of ball hinges, which are free to rotate but not to translate. Advantageously the ball is arranged on the airframe side and the ball socket on the strut or rack side. Alternative implementations may use universal hinges (e.g., cardanic hinges) or spherical bearings.

The use of struts in combination with the freedom of rotations at each strut-end and at the master joint ensures a purely isostatic attachment of the rack with respect to the airframe. Isostatism is a result of exactly six independent reaction load vectors (without any local rotations) involved in the ground service device fixation to the airframe. Three of the six independent reaction load vectors correspond to the axial loads on the struts and three others to the load reaction components of the master fixation in x-, y- and z-axis direction.

The axis of the vertical struts and the axis of the horizontal strut are preferably arranged essentially tangential to the side shell and the lower shell respectively. As a result, no transverse loading is excited on the shells. The master fixation, when preferably arranged in a central position of the lower shell, interconnects a first frame to react vertical loads (i.e., in z-axis direction) and parasitic moments associated to the offset between the ball and the lower shell.

If desired, the lateral fittings and the lower fitting may be interconnected to a second frame. In this case, the axis of the struts can be inclined by a certain inclination angle, but still being essentially oriented in vertical and horizontal position respectively.

The rack base, which represents the main load bearing element of the ground service device, is arranged bellow the airframe. The vertical beams, which are used to attach the poles at each side of the airframe, extend upwardly at both sides of the airframe. As a result, the ground service device is installed from bellow the airframe, which improves the handling qualities, makes the installation procedure simpler for the operator, and reduces the risk of damage to the rotary-wing aircraft.

The ground service device is rigidly pre-attached to the airframe and represents a stable and rigid platform for the subsequent fixation of the poles. The vertical beams can be designed to support multiple poles simultaneously. By doing so, all fixations of the multiple poles are arranged at the non-structural, removable ground service device. Hence, independently of the number of poles used on the ground service device, the amount of structural fixations points on the airframe is always kept to the minimum. This is a big advantage in comparison to state-of-art solutions with individual attachments of poles to the airframe structure. Advantageously, all vertical beams used to receive the poles are arranged close to the main beam in essentially the same longitudinal position.

The fixations of the rack to the airframe are allocated within the lower perimeter of the airframe, which in turn eases the accessibility for the operator to the fixations for mounting/dismounting the ground service device.

The fixation principle is purely isostatic. This means that there is no susceptibility against the relative positioning tolerances of the ground service device fixations to the airframe. Hence, there is neither a need for a specific positioning tool during the riveting of the brackets ensuring an exact position of the fittings relative to each other, nor the need for adjustability of the fixation elements to compensate tolerances. This simplifies the airframe design and production on the one hand, and the handling of the equipment during installation/de-installation on the other. Moreover, one single ground service device can be installed on either rotary-wing aircraft without the need of re-adjusting.

Since the fixation principle is purely isostatic, unintended built-in stresses in case of a lack of adjustment are avoided and the loads calculation is simplified.

The orientation of the axis of the struts can be easily designed to be tangential to the shell. Thereby, the shell is not laterally loaded and there is no need for any back-side supporting members (e.g., frame, intercostals, etc) on the airframe, which reduces the additional airframe mass to a minimum. The fittings may be attached externally to the airframe. The fasteners are advantageously loaded in shear.

In the presence of a frame at the lower and lateral airframe fittings, the axis of the vertical strut and the horizontal strut can be alternatively inclined with respect to the vertical and horizontal axis. Advantageously the airframe fitting penetrates the shell through a local cut-out and interconnects simultaneously the web of the frame and the shell.

A first strut axis is associated with the first strut, and a second strut axis is associated with the second strut. The first strut axis may deviate by a first strut inclination angle of less than 40 degrees from a first axis, wherein the first axis is perpendicular to a plane that is defined by the rack base. The second strut axis may deviate by a second strut inclination angle of less than 40 degrees from a second axis that is parallel to the first axis.

In some implementations, the first and second strut axes are configured to be tangential to side shells of a tail boom of the rotary-wing aircraft when the first and second struts are attached to the first and second receiver mounts, respectively.

According to one aspect, a third strut axis is associated with the third strut. The third strut axis may deviate by a third strut inclination angle of less than 40 degrees from a third axis that is perpendicular to the first axis and parallel to the plane that is defined by the rack base.

By way of example, the third strut axis is configured to be tangential to a lower shell of a tail boom of the rotary-wing aircraft when the third strut is attached to the third receiver mount.

According to one aspect, the ground service device further comprises support arms that connect the clamps with the rack base.

Illustratively, the rack base further comprises a main beam and first and second diagonal beams that form a triangle together with the main beam.

Illustratively, the rack base further comprises first and second lateral beams that connect the support arms with the main beam.

In some implementations, the attachment device is fixedly attached to the rack base at an intersection of the first and second diagonal beams.

According to one aspect, the first strut, the second strut, and the third strut are pivotally attached to the rack base by at least one of a ball joint, a spherical bearing, or a universal joint.

Furthermore, a connecting interface that is adapted for being mounted on a rotary-wing aircraft and receiving the ground service device described above comprises a first receiver mount that is adapted for releasably receiving the first strut; a second receiver mount that is adapted for releasably receiving the second strut; a third receiver mount that is adapted for releasably receiving the third strut; and a fourth receiver mount that is attached to a frame at a lower shell of the rotary-wing aircraft and adapted for releasably receiving the attachment device.

Illustratively, the first receiver mount and the second receiver mount are configured for being fastened to a side shell of the rotary-wing aircraft, and the third receiver mount is configured for being fastened to the lower shell of the rotary-wing aircraft.

By way of example, the second receiver mount on the side shell and the third receiver mount on the lower shell are configured to have an offset in a longitudinal direction of the rotary-wing aircraft.

According to one aspect, the second receiver mount is configured for being fastened to the side shell of the rotary-wing aircraft at a same longitudinal position and at an opposite lateral position as the first receiver mount.

Moreover, a ground service system comprises the ground service device described above and the connecting interface that is adapted for being mounted on the rotary-wing aircraft described above.

Embodiments are outlined by way of example in the following description with reference to the attached drawings. In these attached drawings, identical or identically functioning components or elements are labeled with identical reference numbers and characters and are, consequently, only described once in the following description.
- Figure 1 is a diagram of an illustrative rotary-wing aircraft with a multi-blade rotor,
- Figure 2 is a diagram of an illustrative ground service system with an illustrative ground service device that secures rotor blades of a multi-blade rotor of a rotary-wing aircraft in a non-operational mode of the rotary-wing aircraft,
- Figure 3 is a three-dimensional diagram of an illustrative ground service system that includes a ground service device connected to a connecting interface on a rotary-wing aircraft,
- Figure 4 shows a portion of the illustrative ground service system of Figure 3,
- Figure 5 shows the illustrative ground service system of Figure 3 installed on a rotary-wing aircraft in longitudinal direction of the rotary-wing aircraft,
- Figure 6 is a three-dimensional diagram of an illustrative ground service device that is installed from below the airframe of a rotary-wing aircraft to a connecting interface on the rotary-wing aircraft, .
- Figure 7 is a three-dimensional diagram of an illustrative ground service system that includes a ground service device connected to a connecting interface fixed to a frame of a rotary-wing aircraft,
- Figure 8 shows a portion of the illustrative ground service system of Figure 7, and
- Figure 9 shows the illustrative ground service system of Figure 7 installed on a rotary-wing aircraft in longitudinal direction of the rotary-wing aircraft.

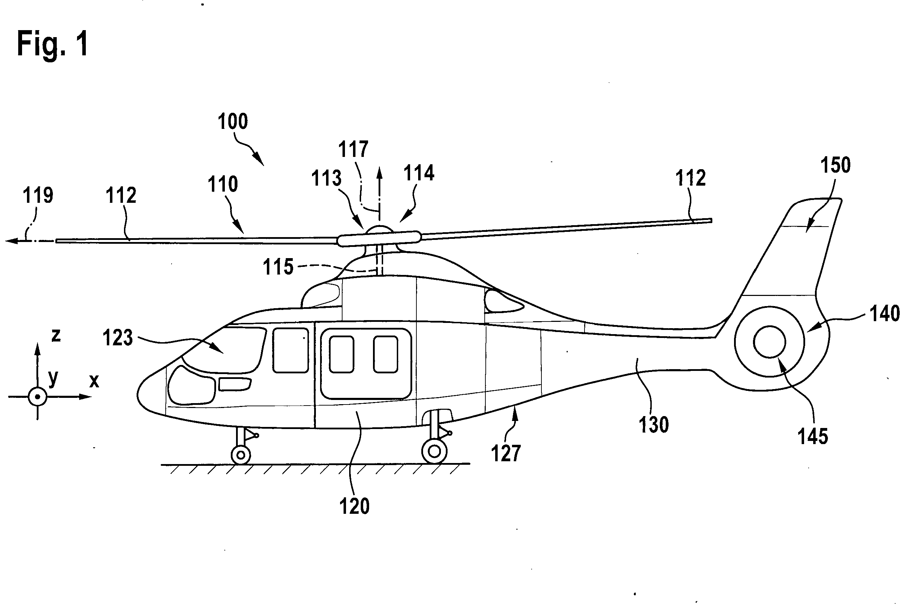

Figure 1 is a diagram of an illustrative rotary-wing aircraft 100 having a multi-blade rotor 110 with a rotor shaft 115. As shown in Figure 1, the rotary-wing aircraft 100, which is sometimes also referred to as rotorcraft 100, is illustrated as a helicopter. Thus, for purposes of simplicity and clarity, the rotorcraft 100 may hereinafter be referred to as the "helicopter" 100.

Illustratively, helicopter 100 has a fuselage 120 that forms an airframe of the helicopter 100. The fuselage 120 is connected to a suitable landing gear and illustratively forms a cabin 123 and a rear fuselage 127. The rear fuselage 127 is connected to a tail boom 130.

By way of example, helicopter 100 may include at least one counter-torque device 140 configured to provide counter-torque during operation, i.e. to counter the torque created by rotation of the multi-blade rotor 110 for purposes of balancing the helicopter 100 in terms of yaw. If desired, counter-torque device 140 may be shrouded.

The at least one counter-torque device 140 is illustratively provided at an aft section of the tail boom 130 and may have a tail rotor 145. The aft section of the tail boom 130 may include a fin 150.

Illustratively, the multi-blade rotor 110 provides lift and forward or backward thrust during operation. The multi-blade rotor 110 comprises a plurality of rotor blades 112 that are mounted at an associated rotor head 114 with a rotor hub 113 to a rotor shaft 115, which rotates in operation of the helicopter 100 around an associated rotor axis 117 in a rotor plane 119.

In some scenarios, the rotor blades 112 may be folded. For example, when the helicopter 100 is stowed in a hangar or in a hangar deck of a ship such as a helicopter carrier or an aircraft carrier, the rotor blades 112 of the multi-blade rotor 110 are often folded to allow for a denser stowage.

When the rotor blades 112 are folded, they stand nearly perpendicular to their pitch rotation axis, and gravity force or heavy weather conditions could cause abnormal loading on the rotor blade root that would result in serious damage on the rotor blade attachment.

Therefore, the rotor blades 112 need to be secured to prevent abnormal loading on the blade root attachment to the rotor head, and to avoid that the rotor blades 112 hit each other, the fuselage 120, or the tail boom 130, when the rotor blades 112 are folded.

Figure 2 is a diagram of two illustrative ground service systems 250 each with an illustrative ground service device 200 that secures two rotor blades 112 of a four-blade rotor 110 of a rotary-wing aircraft 100 in a non-operational mode of the rotary-wing aircraft on the ground. As shown in Figure 2, the rotor blades 112 of the four-blade rotor 110 are in a rearward folded position in line with the fuselage 120. In some implementations, each rotor blade 112 may be secured using a separate ground service system 250. In other implementations, more than two rotor blades 112 may be secured by a single ground service system 250.

As shown in Figure 2, each illustrative ground service system 250 includes a ground service device 200 and a connecting interface 275. A first ground service device 200 is attached to the rear fuselage 127, and a second ground service device 200 is attached to the tail boom 130. Each ground service device 200 includes a rack 210 that is releasably attached to one of the connecting interfaces 275, which are illustratively allocated at a lower shell 234 and side shells 232 of the rear fuselage 127 and the tail boom 130.

Each ground service device 200 further includes a rack 210 and clamps 240 that are attached to the rack 210. The clamps 240 hold the rotor blades 112, thereby releasably connecting the rotor blades 112 with the respective connecting interface 275.

Illustratively, each ground service device 200 may include support arms 220. The support arms 220 may connect the clamps 240 with the rack 210. As shown in Figure 2, each ground service device 200 includes two support arms 220, one support arm 220 on each side of the rotary-wing aircraft 100. Each rotor blade 112 is secured by a separate clamp 240, and each clamp 240 is attached to a separate support arm 220. If desired, a clamp 240 may secure more than one rotor blade 112 and/or more than one clamp 240 may be attached to a support arm 220.

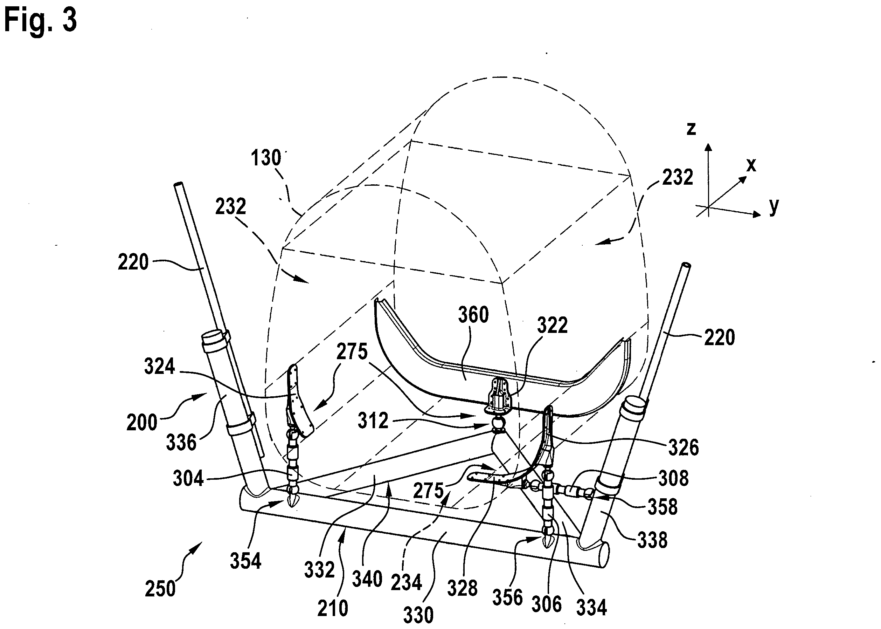

Figure 3 is a three-dimensional diagram of an illustrative ground service system 250 that includes a ground service device 200 for securing rotor blades of a multi-blade rotor of a rotary-wing aircraft in a non-operational mode of the rotary-wing aircraft and a connecting interface 275 on the rotary-wing aircraft that is adapted for receiving the ground service device 200.

The ground service device 200 includes clamps 240 and a rack 210 that is releasably attachable to first, second, third, and fourth receiver mounts 322, 324, 326, 328 of the rotary-wing aircraft. The rack 210 includes a rack base 340, first, second, and third struts 304, 306, 308, and an attachment device 312.

The first strut 304 is pivotally attached to the rack base 340 and adapted for releasably attaching the rack base 340 with the first receiver mount 322. The second strut 306 is pivotally attached to the rack base 340 and adapted for releasably attaching the rack base 340 with the second receiver mount 326. The third strut 308 is pivotally attached to the rack base 340 and adapted for releasably attaching the rack base 340 with the third receiver mount 328. The attachment device 312 is fixedly attached to the rack base 340 and adapted for releasably attaching the rack base 340 with the fourth receiver mount 322 below a lower shell 234 of the rotary-wing aircraft. If desired, the fourth receiver mount 322 may be allocated below the tail boom 130.

Illustratively, the rack base 340 may include a main beam 330 and first and second diagonal beams 332, 334. In some implementations, the first and second diagonal beams 332, 334 may have the same length. In other implementations the first and second diagonal beams 332, 334 may have a different length.

The main beam 330 and the first and second diagonal beams 332, 334 may form a triangle. If desired, the first and second diagonal beams 332, 334 connect with the main beam 330 at its outermost perimeter.

In some implementations, when installed on a rotary-wing aircraft, the first and second diagonal beams 332, 334 may extend from the main beam 330 in longitudinal direction (i.e., in direction of the x-axis) towards the aft of the rotary-wing aircraft. In other implementations, when installed on a rotary-wing aircraft, the first and second diagonal beams 332, 334 may extend in longitudinal direction from the main beam 330 towards the front of the rotary-wing aircraft.

By way of example, the rack base 340 may include first and second lateral beams 336, 338. As shown in Figure 3, the first and second lateral beams 336, 338 are fixedly attached to the main beam 330.

If desired, the support arms 220 may be attached to the lateral beams 336, 338. Thus, the first and second lateral beams 336, 338 may connect the support arms 220 with the main beam 330. In the scenario in which the clamps are attached to the support arms 220, the clamps may connect the rotor blades via the support arms 220, the lateral beams 336, 338, the attachment device 312, and the struts 304, 306, 308 with the first, second, third and fourth receiver mounts 322, 324, 326, 328 of the rotary-wing aircraft such that the rotor blades are secured in the non-operational mode of the rotary-wing aircraft.

By way of example, the attachment device 312 may be fixedly attached to the rack base 340 at an intersection of the first and second diagonal beams 332, 334. In some implementations, the first, second, and third struts 304, 306, 308 may be pivotally attached to the rack base 340 at respective strut-rack attachments 354, 356, 358. For example, the first and second struts 304, 306 may be pivotally attached to the main beam 330, and the third strut 308 may be pivotally attached to one of the lateral beams 336, 338. As shown in Figure 3, the third strut 308 is pivotally attached to the second lateral beam 338. However, the third strut 308 may be pivotally attached to the first lateral beam 336 instead, if desired.

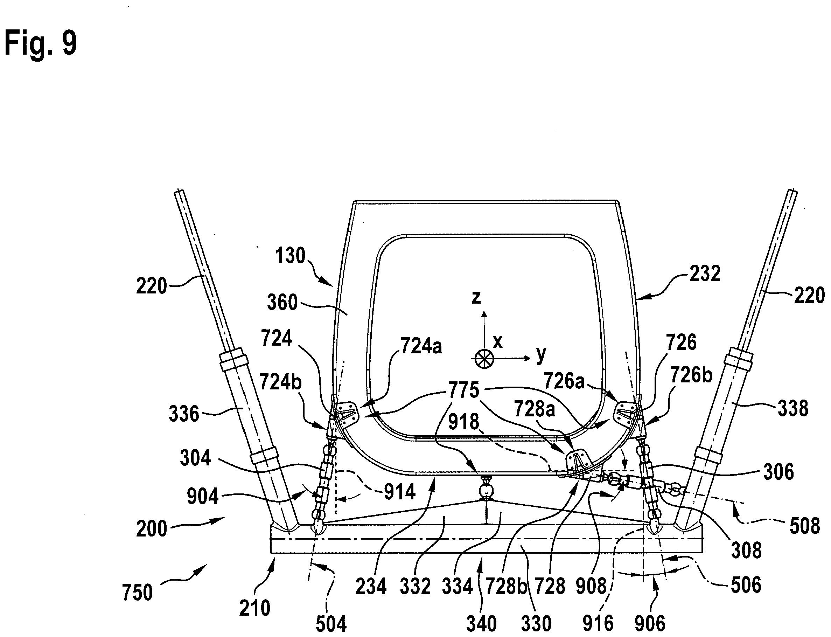

Illustratively, the first strut 304, the second strut 306, and the third strut 308 are pivotally attached to the rack base 340 by at least one of a ball joint, a spherical bearing, or a universal joint. As an example, the ball of a ball joint may be fixedly attached to the rack base 340, and the socket of the ball joint may be part of the respective strut 304, 306, 308. As another example, the socket of a ball joint may be fixedly attached to the rack base 340, and the ball of the ball joint may be part of the respective strut 304, 306, 308. In both examples, the first, second and third struts 304, 306, 308 may pivot at the respective strut-rack attachments 354, 356, 358 as further explained with reference to Figure 9.

The connecting interface 275 includes a first receiver mount 324 that is adapted for releasably receiving the first strut 304, a second receiver mount 326 that is adapted for releasably receiving the second strut 306, a third receiver mount 328 that is adapted for releasably receiving the third strut 308, and a fourth receiver mount 322 that is attached to a frame 360 at a lower shell 234 of the rotary-wing aircraft and adapted for releasably receiving the attachment device 312. For example, the fourth receiver mount 322 is installed to a web of frame 360.

Illustratively, the first receiver mount 324 and the second receiver mount 326 may be fastened to a side shell 232 of the rotary-wing aircraft, and the third receiver mount 328 may be fastened to the lower shell 234 of the rotary-wing aircraft. For example, fasteners may fasten the first, second, and third receiver mounts 324, 326, 328 to the shell of the rotary-wing aircraft. The fasteners may include screws, rivets, or any other type of fastener that enables a fastening of the first, second, and third receiver mounts 324, 326, 328 to the shell of the rotary-wing aircraft.

By way of example, the first, second, and third receiver mounts 324, 326, 328 may be arranged essentially at the same longitudinal section plane of the rotary-wing aircraft (i.e., at the same position on the x-axis), whereas the first receiver mount 322 may be arranged offset in longitudinal direction of the rotary-wing aircraft by a predetermined from the first, second and third receiver mounts 324, 326, 328. For example, the second receiver mount 326 may be fastened to the side shell 232 of the rotary-wing aircraft at a same longitudinal position (x-axis) and at an opposite lateral position (y-axis) as the first receiver mount 324.

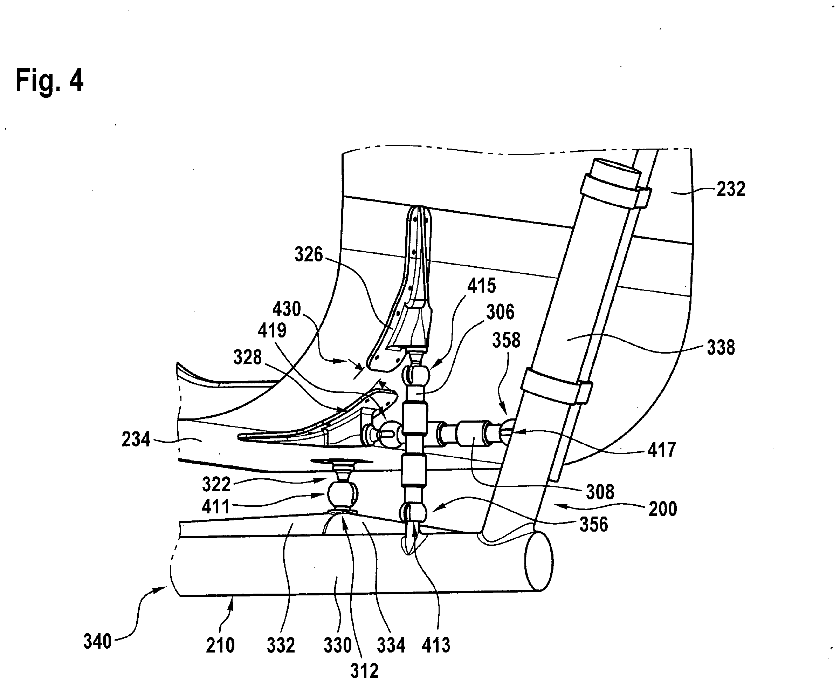

Figure 4 shows a portion of the illustrative ground service system 250 of Figure 3. Please, note that the strut 304 and the receiver mount 324 of Figure 3 are not shown in Figure 4. However, the characteristics of the receiver mount 326 and of the strut 306 and its attachment to the rack base 340 and to the receiver mount 326 described in Figure 4 are also applicable to the receiver mount 324 and the strut 304 of Figure 3 and its attachment to the rack base 340 and to the receiver mount 324.

Illustratively, struts 306, 308 are pivotally attached to the rack base 340 by ball joints 413, 417. Thus, the struts 306, 308 may rotate or pivot around the ball joints 413, 417, respectively. However, the struts 306, 308 may not otherwise move relative to the rack base 340.

As shown in Figure 4, the balls of the ball joints 413, 417 are attached to the rack base 340 (i.e., the main beam 330 and the lateral beam 338, respectively), while the sockets of the ball joints 413, 417 are part of the respective strut 306, 308. If desired, the sockets of the ball joints may be attached to the rack base 340 instead, while the balls of the ball joints are part of the respective strut 306, 308.

Illustratively, attachment device 312 and receiver mount 322 may form a ball joint 411. As shown in Figure 4, the ball of the ball joint 411 is attached to the rack base 340, while the socket of the ball joint 411 is part of the receiver mount 322. If desired, the socket of the ball joint 411 may be attached to the rack base 340 instead, while the ball of the ball joint 411 is part of the receiver mount 322.

By way of example, receiver mounts 326, 328 may be riveted to the side shell 232 and lower shell 234 of the rotary-wing aircraft, respectively. Receiver mount 326 on the side shell 232 and receiver mount 328 on the lower shell 234 may have an offset 430 in a longitudinal direction (e.g., x-axis of Figure 3) of the rotary-wing aircraft relative to each other. The offset 430 in longitudinal direction between the receiver mounts 326, 328 may prevent a collision between the struts 306, 308 during an installation operation.

The ends of the struts 306, 308 that are adapted for releasably attaching the rack base 340 with the receiver mounts 326, 328 may each form a respective ball joint 415, 419 with the respective receiver mount 326, 328. As shown in Figure 4, the balls of the ball joints 415, 419 are attached to the receiver mounts 326, 328, while the sockets of the ball joints 415, 419 are part of the struts 306, 308. If desired, the sockets of the ball joints may be attached to the receiver mounts 326,328 instead, while the balls of the ball joints are part of the struts 306, 308.

In some implementations, the balls or sockets of the receiver mounts 326, 328 may be parts that are separate from the receiver mounts 326, 328. For example, the balls or sockets may be screwed into the receiver mounts 326, 328. This eases the production of the receiver mounts 326, 328 and allows for the replacement of the balls or sockets in case of damage or excessive wear. The receiver mounts may contribute to protecting the side shell 232 and the lower shell 234 of the airframe from damage by accidentally hitting the airframe with the struts 306, 308 during the installation operation.

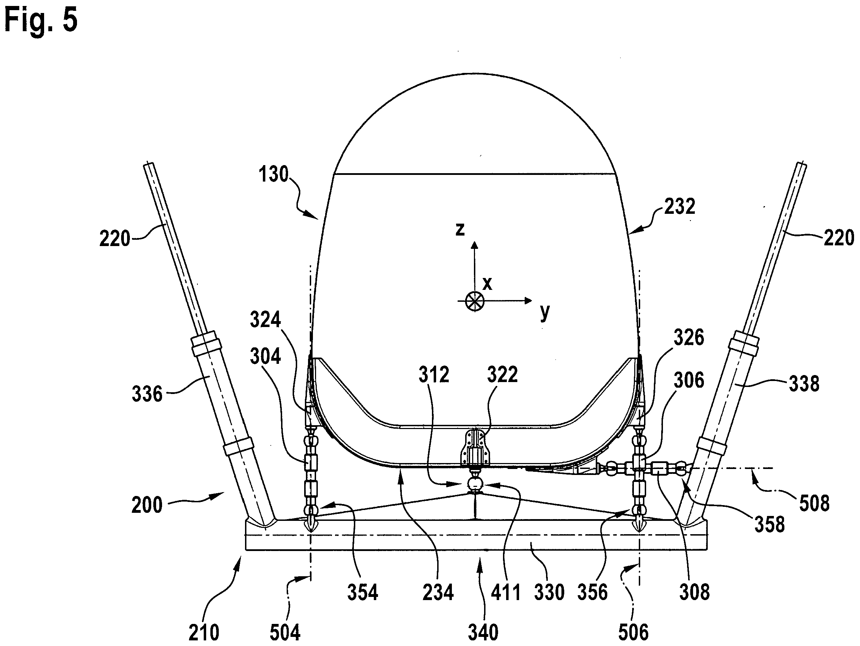

Figure 5 shows in longitudinal direction (x-axis) of a rotary-wing aircraft, the illustrative ground service system 250 of Figure 3 with an illustrative ground service device 200 attached to an illustrative connecting interface 275 installed on a tail boom 130 of the rotary-wing aircraft.

Illustratively, a first strut axis 504 is associated with the first strut 304 of the ground service device 200, and a second strut axis 506 is associated with the second strut 306 of the ground service device 200. In some implementations, the first and second strut axes 504, 506 are tangential to side shells of a tail boom 130 of the rotary-wing aircraft when the first and second struts 304, 306 are attached to the first and second receiver mounts 324, 326, respectively. As a result, the side shells 232 are not laterally loaded by the installed ground service device 200 and there is no need for back-side supporting members inside the tail boom 130 for attaching the first and second receiver mounts 324, 326.

By way of example, a third strut axis 508 is associated with the third strut 308 of the ground service device 200. In some implementations, the third strut axis 508 is tangential to a lower shell 234 of a tail boom 130 of the rotary-wing aircraft when the third strut 308 is attached to the third receiver mount 328. As a result, the lower shell 234 is not laterally loaded by the installed ground service device 200 and there is no need for back-side supporting members inside the tail boom 130 for attaching the third receiver mount 328.

In such implementations, the receiver mounts 324, 326, 328 may be attached externally to the side shells 232 and the lower shell 234 of the tail boom 130.

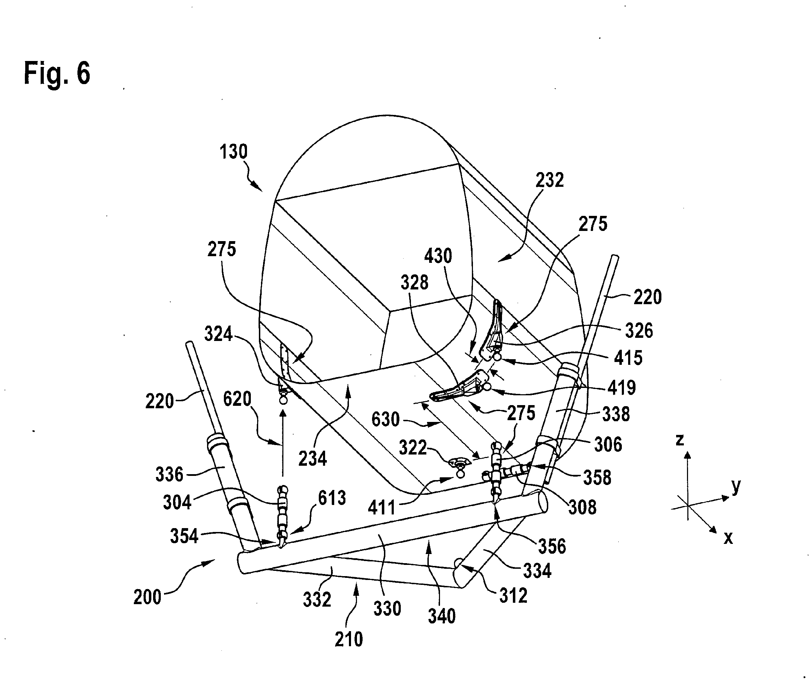

Figure 6 is a three-dimensional diagram of an illustrative ground service device 200 that is installed in mounting direction 620 from below the airframe of a rotary-wing aircraft to a connecting interface 275 on the tail boom 130 of the rotary-wing aircraft.

As shown in Figure 6; receiver mount 326 of the connecting interface 275 on the side shell 232 of the tail boom 130 and receiver mount 328 of the connecting interface 275 on the lower shell 234 of the tail boom 130 may have an offset 430 in longitudinal direction (i.e., along the x-axis) of the rotary-wing aircraft. Illustratively, the receiver mount 328 and the receiver mount 322 may have another offset 630 in longitudinal direction (i.e., along the x-axis) that is comparably greater than offset 430. In some implementations, the offset 630 may have a same order of magnitude as the width of the tail boom 130. In other implementations, the offset 630 may be larger than the width of the tail boom 130.

During the installation operation, the ground service device 200 may be lifted in mounting direction 620 towards the connecting interface 275. Thereby, the attachment device 312 may first be attached to the receiver mount 322. Afterwards, the struts 304, 306, 308 may be attached to the receiver mounts 324, 326, 328, respectively. Since the struts 304, 306, 308 are pivotally attached to the rack base 340 (e.g., using ball joints such as ball joint 613), the struts 304, 306, 308 can easily be oriented to reach the corresponding receiver mounts 324, 326, 328.

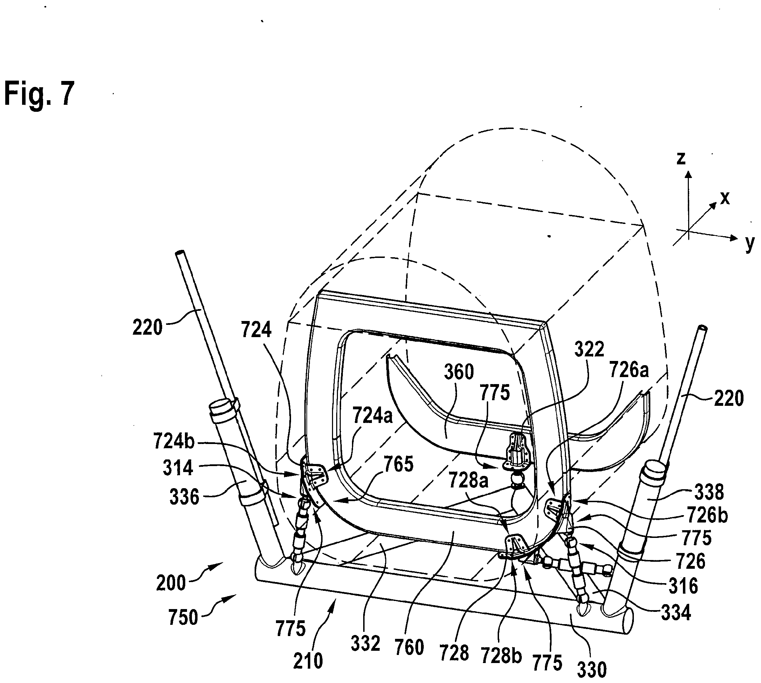

Figure 7 is a three-dimensional diagram of an illustrative ground service system 750 that includes a ground service device 200 connected to a connecting interface 775 fixed to frames 360, 760 inside the tail boom 130 of a rotary-wing aircraft.

As shown in Figure 7, the connecting interface 775 includes a first receiver mount 724 that is adapted for releasably receiving the first strut 304 of the ground service device 200, a second receiver mount 726 that is adapted for releasably receiving the second strut 306 of the ground service device 200, a third receiver mount 728 that is adapted for releasably receiving the third strut 308 of the ground service device 200, and a fourth receiver mount 322 that is attached to a frame 360 at a lower shell 234 of the rotary-wing aircraft and adapted for releasably receiving the attachment device 312.

By way of example, the frame 760 may include a frame web 765 inside the shell of the tail boom 130. Illustratively, the first receiver mount 724 may include a first internal receiver mount portion 724a and a first external receiver mount portion 724b. The first internal receiver mount portion 724a may be attached to the frame web 765 inside the tail boom 130, while the first external receiver mount portion 724b may be attached to the side shell of the tail boom 130. Similarly, the second receiver mount 726 may include a second internal receiver mount portion 726a and a second external receiver mount portion 726b, and the third receiver mount 728 may include a third internal receiver mount portion 728a and a third external receiver mount portion 728b. The second and third internal receiver mount portions 726a, 728a may be attached to the frame web 765 inside the tail boom 130, while the second and third external receiver mount portions 726b, 728b may be attached to the side shell and the lower shell of the tail boom 130, respectively.

Illustratively, rivets may attach the external receiver mount portions 724b, 726b, 728b to the shell of the tail boom 130. Fasteners such as rivets, screw, nuts and bolts, etc. may attach the internal receiver mount portions 724a, 726a, 728a to the frame web 765.

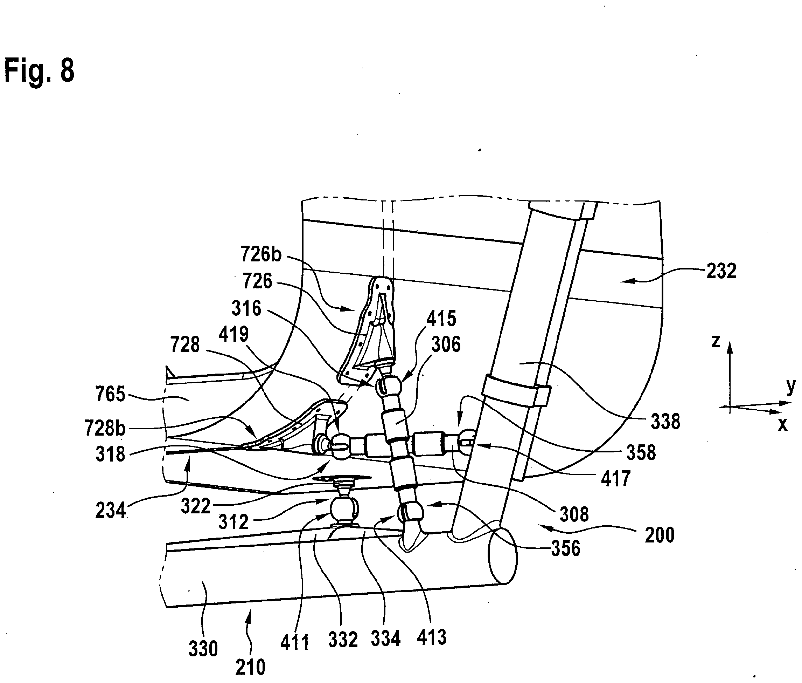

Figure 8 shows a portion of the illustrative ground service system 750 of Figure 7. Please, note that the strut 304 and the receiver mount 724, and the attachment of the strut 304 to the receiver mount 724 of Figure 7 are not shown in Figure 8. However, the characteristics of the receiver mount 726, the strut 306, and the attachment of the strut 306 to the receiver mount 726 described in Figure 8 are also applicable to the strut 304, the receiver mount 724, and to the attachment of the strut 304 to the receiver mount 724 of Figure 7.

By way of example, the external receiver mount portions 726b, 728b may be riveted to the side shell 232 and lower shell 234 of the rotary-wing aircraft, respectively. The external receiver mount portion 726b on the side shell 232 and the external receiver mount portion 728a on the lower shell 234 may be allocated on the airframe of the rotary-wing aircraft at essentially a same longitudinal direction (e.g., x-axis of Figure 7). Thus, the offset in longitudinal direction between the receiver mounts 726, 728 may be small, since the internal receiver mount portions are attached to the same frame web 765. In some implementations, one of the internal receiver mount portions may be attached in longitudinal direction to a first side of the frame web 765, while the other internal receiver mount portion is attached in longitudinal direction to a second side of the frame web 765 that is opposite the first side of the frame web 765, thereby achieving an offset in longitudinal direction between the receiver mounts 726, 728 that corresponds to the thickness of the frame web 765.

A collision between the struts 306, 308 during an installation operation with receiver mounts 726, 728 may be avoided by an offset in longitudinal direction between the strut-rack attachments 356, 358 and/or by inclining the strut 308 relative to a plane that is defined by the main beam 330 and the diagonal beams 332, 334 (i.e., the plane defined by the x- and y-axes).

The ends of the struts 306, 308 that are adapted for releasably attaching the rack base 340 with the receiver mounts 726, 728 may each form a respective ball joint 415, 419 with the respective receiver mount 326, 328. As shown in Figure 8, the balls of the ball joints 415, 419 are attached to the receiver mounts 726, 728, while the sockets of the ball joints 415, 419 are part of the struts 306, 308. If desired, the sockets of the ball joints may be attached to the receiver mounts 726, 728 instead, while the balls of the ball joints are part of the struts 306, 308.

In some implementations, the balls or sockets of the receiver mounts 726, 728 may be separate from the receiver mounts 726, 728. For example, the balls or sockets may be screwed into the receiver mounts 726, 728. This eases the production of the receiver mounts 726, 728 and allows for the replacement of the balls or sockets in case of damage or excessive wear. The receiver mounts 726, 728 may contribute to protecting the side shell 232 and the lower shell 234 of the airframe from damage by accidentally hitting the airframe with the struts 306, 308 during the installation operation.

Figure 9 shows in longitudinal direction (x-axis) of a rotary-wing aircraft, the illustrative ground service system 750 of Figure 7 with an illustrative ground service device 200 attached to an illustrative connecting interface 775 installed on a tail boom 130 of the rotary-wing aircraft.

When releasably attaching the rack 210 to the four receiver mounts of the rotary-wing aircraft, the first, second, and third struts 304, 306, 308 may be pivotally moved relative to the rack base 340. If desired, the pivotal movement of the first, second, and third struts 304, 306, 308 relative to the rack base 340 may be limited to a predetermined deviation from first, second, and third axes 914, 916, 918, respectively.

Illustratively, a first strut axis 504 is associated with the first strut 304 of the ground service device 200, and a second strut axis 506 is associated with the second strut 306 of the ground service device 200. In some implementations, the first strut axis 504 deviates by a first strut inclination angle 904 of less than 40 degrees from an axis 914 that, as shown in Figure 9, is perpendicular to the main beam 330, and the second strut axis 506 deviates by a second strut inclination angle 906 of less than 40 degrees from an axis 916 that is parallel to axis 914 and thereby, as shown in Figure 9, perpendicular to the main beam 330.

By way of example, a third strut axis 508 is associated with the third strut 308 of the ground service device 200. In some implementations, the third strut axis 508 deviates by a third strut inclination angle 908 of less than 40 degrees from an axis 918 that is perpendicular to axis 914 and thereby, as shown in Figure 9, parallel to the main beam 330.

It should be noted that the above described embodiments are merely described to illustrate possible embodiments of the present invention, but not in order to restrict the present invention thereto. Instead, multiple modifications and variations of the above described embodiments are possible, the scope of protection being defined by the appended claims.

For instance, the rack base 340 of Figure 3 is shown with a main beam 330 and two diagonal beams 332, 334. However, the rack base 340 of Figure 3 may have four beams that form a rectangle instead, if desired. Such a rack base could accommodate more than two lateral beams than the two lateral beams 336, 338 shown in Figure 3. Such additional lateral beams may receive support arms 220 with clamps such that more than two rotor blades may be secured by a ground service device with such a rack base. Alternatively, the rack base may incorporate truss members, curved beams or monocoque constructions.

Moreover, the ground service device 200 of Figure 3 is shown with support arms 220 that are attached to the lateral beams 336, 338. However, the lateral beams 336, 338 may be implemented as telescopic arms such that the support arms may be omitted.

Furthermore, the struts 306, 308 of Figure 8 are shown to be straight. Instead, the struts 306, 308 may be slightly arched to avoid a collision with each other during the installation operation.

### Reference List

- 100: rotary-wing aircraft
- 110: multi-blade rotor
- 112: rotor blade
- 113: rotor hub
- 114: rotor head
- 115: rotor shaft
- 117: rotor axis
- 119: rotor plane
- 120: fuselage
- 123: cabin
- 127: rear fuselage
- 130: tail boom
- 140: counter-torque device
- 145: tail rotor
- 150: fin
- 200: ground service device
- 210: rack
- 220: support arm
- 232: side shell
- 234: lower shell
- 240: clamp
- 250: ground service system
- 275: connecting interface
- 304, 306, 308: strut
- 312, 314, 316, 318: attachment device
- 322, 324, 326, 328: receiver mount .
- 330: main beam
- 332, 334: diagonal beam
- 336, 338: lateral beam
- 340: rack base
- 354, 356, 358: strut-rack attachment
- 360: frame
- 411, 413, 415, 417, 419: ball joint
- 430: offset
- 504, 506, 508: strut axis
- 613: ball joint
- 620: mounting direction
- 630: offset
- 724, 726, 728: receiver mount
- 724a, 726a, 728a: internal receiver mount portion
- 724b, 726b, 728b: external receiver mount portion
- 750: ground service system
- 760: frame
- 765: frame web
- 775: connecting interface
- 904, 906, 908: strut inclination angle
- 914, 916, 918: axis
- x: longitudinal axis
- y: transverse axis
- z: vertical axis

## Claims

1. A ground service device (200) for securing rotor blades (112) of a multi-blade rotor (110) of a rotary-wing aircraft (100) in a non-operational mode of the rotary-wing aircraft (100), comprising:
a rack (210) that is releasably attachable to first, second, third, and fourth receiver mounts (322, 324, 326, 328, 724, 726, 728) of the rotary-wing aircraft (100) and comprises:
a rack base (340),
a first strut (304) that is pivotally attached to the rack base (340) and adapted for releasably attaching the rack base (340) with the first receiver mount (324, 724),
a second strut (306) that is pivotally attached to the rack base (340) and adapted for releasably attaching the rack base (340) with the second receiver mount (326, 726),
a third strut (308) that is pivotally attached to the rack base (340) and adapted for releasably attaching the rack base (340) with the third receiver mount (328, 728), and
an attachment device (312) fixedly attached to the rack base (340) that is adapted for releasably attaching the rack base (340) with the fourth receiver mount (322) below a lower shell (234) of the rotary-wing aircraft (100); and
clamps (240) that are attached to the rack (210) for releasably connecting the rotor blades (112) with the first, second, third and fourth receiver mounts (322, 324, 326, 328, 724, 726, 728) of the rotary-wing aircraft (100) such that the rotor blades (112) are secured in the non-operational mode of the rotary-wing aircraft (100).

2. The ground service device (200) of claim 1, wherein a first strut axis (504) is associated with the first strut (304), wherein the first strut axis (504) deviates by a first strut inclination angle (904) of less than 40 degrees from a first axis (914), wherein the first axis (914) is perpendicular to a plane that is defined by the rack base (340), wherein a second strut axis (506) is associated with the second strut (306), and wherein the second strut axis (506) deviates by a second strut inclination angle (906) of less than 40 degrees from a second axis (916) that is parallel to the first axis (914).

3. The ground service device (200) of claim 2, wherein the first and second strut axes (504, 506) are configured to be tangential to side shells of a tail boom (130) of the rotary-wing aircraft (100) when the first and second struts (304, 306) are attached to the first and second receiver mounts (324, 326), respectively.

4. The ground service device (200) of any one of claims 2 or 3, wherein a third strut axis (508) is associated with the third strut (308), and wherein the third strut axis (508) deviates by a third strut inclination angle (908) of less than 40 degrees from a third axis (918) that is perpendicular to the first axis (914) and parallel to the plane that is defined by the rack base (340).

5. The ground service device (200) of claim 4, wherein the third strut axis (508) is configured to be tangential to a lower shell (234) of a tail boom (130) of the rotary-wing aircraft (100) when the third strut (308) is attached to the third receiver mount (328).

6. The ground service device (200) of any one of the preceding claims, further comprising:
support arms (220) that connect the clamps (240) with the rack base (340).

7. The ground service device (200) of claim 6, wherein the rack base (340) further comprises:
a main beam (330); and
first and second diagonal beams (332, 334) that form a triangle together with the main beam (330).

8. The ground service device (200) of claim 7, wherein the rack base (340) further comprises:
first and second lateral beams (336, 338) that connect the support arms (220) with the main beam (330).

9. The ground service device (200) of any one of claims 7 to 8, wherein the attachment device (312) is fixedly attached to the rack base (340) at an intersection of the first and second diagonal beams (332, 334).

10. The ground service device (200) of any one of the preceding claims, wherein the first strut (304), the second strut (306), and the third strut (308) are pivotally attached to the rack base (340) by at least one of a ball joint, a spherical bearing, or a universal joint.

11. A connecting interface (275, 775) that is adapted for being mounted on a rotary-wing aircraft (100) and receiving the ground service device (200) of any one of the preceding claims, comprising:
a first receiver mount (324, 724) that is adapted for releasably receiving the first strut (304);
a second receiver mount (326, 726) that is adapted for releasably receiving the second strut (306);
a third receiver mount (328, 728) that is adapted for releasably receiving the third strut (308);
**characterized in that**:
the connecting interface comprises a fourth receiver mount (322) that is adapted for being attached to a frame (360) at a lower shell (234) of the rotary-wing aircraft (100) and adapted for releasably receiving the attachment device (312).

12. The connecting interface (275, 775) of claim 11, wherein the first receiver mount (324, 724) and the second receiver mount (326, 726) are configured for being fastened to a side shell (232) of the rotary-wing aircraft (100), and wherein the third receiver mount (328, 728) is configured for being fastened to the lower shell (234) of the rotary-wing aircraft (100).

13. The connecting interface (275, 775) of claim 12, wherein the second receiver mount (326) on the side shell (232) and the third receiver mount (328, 728) on the lower shell (234) are configured to have an offset (430) in a longitudinal direction (x-axis) of the rotary-wing aircraft (100).

14. The connecting interface (275, 775) of any one of claims 12 or 13, wherein the second receiver mount (326, 726) is configured for being fastened to the side shell (232) of the rotary-wing aircraft (100) at a same longitudinal position (x-axis) and at an opposite lateral position (y-axis) as the first receiver mount (324, 724).

15. A ground service system (250, 750) comprising the ground service device (200) of any one of claims 1 to 10 and the connecting interface (275, 775) that is adapted for being mounted on the rotary-wing aircraft (100) of any one of claims 11 to 14.

## Patentansprüche

1. Bodenwartungsvorrichtung (200) zum Sichern von Rotorblättern (112) eines Mehrblattrotors (110) eines Drehflüglers (100) in einem Nichtbetriebsmodus des Drehflüglers (100), umfassend:
ein Gestell (210), das lösbar an einer ersten, zweiten, dritten und vierten Aufnahmehalterung (322, 324, 326, 328, 724, 726, 728) des Drehflüglers (100) befestigbar ist und umfasst:
eine Gestellbasis (340),
eine erste Strebe (304), die schwenkbar an der Gestellbasis (340) befestigt und zum lösbaren Befestigen der Gestellbasis (340) an der ersten Aufnahmehalterung (324, 724) ausgelegt ist,
eine zweite Strebe (306), die schwenkbar an der Gestellbasis (340) befestigt und zum lösbaren Befestigen der Gestellbasis (340) an der zweiten Aufnahmehalterung (326, 726) ausgelegt ist,
eine dritte Strebe (308), die schwenkbar an der Gestellbasis (340) befestigt und zum lösbaren Befestigen der Gestellbasis (340) an der dritten Aufnahmehalterung (328, 728) ausgelegt ist, und
eine Befestigungsvorrichtung (312), die fest an der Gestellbasis (340) befestigt ist und dazu ausgelegt ist, die Gestellbasis (340) lösbar mit der vierten Aufnahmehalterung (322) unterhalb einer unteren Verkleidung (234) des Drehflüglers (100) zu verbinden; und
Klemmen (240), die an dem Gestell (210) befestigt sind, um die Rotorblätter (112) lösbar mit der ersten, zweiten, dritten und vierten Aufnahmehalterung (322, 324, 326, 328, 724, 726, 728) des Drehflüglers (100) zu verbinden, so dass die Rotorblätter (112) im Nichtbetriebsmodus des Drehflüglers (100) gesichert sind.

2. Bodenwartungsvorrichtung (200) nach Anspruch 1, bei der eine erste Strebenachse (504) der ersten Strebe (304) zugeordnet ist, die erste Strebenachse (504) um einen ersten Strebenneigungswinkel (904) von weniger als 40 Grad von einer ersten Achse (914) abweicht, die erste Achse (914) senkrecht zu einer durch die Gestellbasis (340) definierten Ebene ist, eine zweite Strebenachse (506) der zweiten Strebe (306) zugeordnet ist, und die zweite Strebenachse (506) um einen zweiten Strebenneigungswinkel (906) von weniger als 40 Grad von einer zur ersten Achse (914) parallelen zweiten Achse (916) abweicht.

3. Bodenwartungsvorrichtung (200) nach Anspruch 2, bei der die erste und die zweite Strebenachse (504, 506) konfiguriert sind, tangential zu seitlichen Verkleidungen eines Heckauslegers (130) des Drehflüglers (100) zu verlaufen, wenn die erste und die zweite Strebe (304, 306) an der ersten bzw. der zweiten Aufnahmehalterung (324, 326) befestigt sind.

4. Bodenwartungsvorrichtung (200) nach einem der Ansprüche 2 oder 3, bei der eine dritte Strebenachse (508) der dritten Strebe (308) zugeordnet ist, und die dritte Strebenachse (508) um einen dritten Strebenneigungswinkel (908) von weniger als 40 Grad von einer dritten Achse (918) abweicht, die senkrecht zur ersten Achse (914) und parallel zu der durch die Gestellbasis (340) definierten Ebene ist.

5. Bodenwartungsvorrichtung (200) nach Anspruch 4, bei der die dritte Strebenachse (508) konfiguriert ist, tangential zu einer unteren Verkleidung (234) eines Heckauslegers (130) des Drehflüglers (100) zu verlaufen, wenn die dritte Strebe (308) an der dritten Aufnahmehalterung (328) befestigt ist.

6. Bodenwartungsvorrichtung (200) nach einem der vorstehenden Ansprüche, die ferner Stützarme (220) umfasst, die die Klemmen (240) mit der Gestellbasis (340) verbinden.

7. Bodenwartungsvorrichtung (200) nach Anspruch 6, bei der die Gestellbasis (340) ferner umfasst:
einen Hauptträger (330); und
einen ersten und einen zweiten Diagonalträger (332, 334), die zusammen mit dem Hauptträger (330) ein Dreieck bilden.

8. Bodenwartungsvorrichtung (200) nach Anspruch 7, bei der die Gestellbasis (340) außerdem umfasst:
einen ersten und einen zweiten Querträger (336, 338), die die Stützarme (220) mit dem Hauptträger (330) verbinden.

9. Bodenwartungsvorrichtung (200) nach einem der Ansprüche 7 bis 8, bei der die Befestigungsvorrichtung (312) an einer Kreuzung des ersten und zweiten Diagonalträgers (332, 334) fest an der Gestellbasis (340) befestigt ist.

10. Bodenwartungsvorrichtung (200) nach einem der vorstehenden Ansprüche, bei der die erste Strebe (304), die zweite Strebe (306) und die dritte Strebe (308) durch mindestens eines von einem Kugelgelenk, einem Kugellager oder einem Universalgelenk schwenkbar an der Gestellbasis (340) befestigt sind.

11. Verbindungsschnittstelle (275, 775), die ausgelegt ist, um an einem Drehflügler (100) angebracht zu werden und die Bodenbedienungsvorrichtung (200) nach einem der vorstehenden Ansprüche aufzunehmen, umfassend:
eine erste Aufnahmehalterung (324, 724), die ausgelegt ist, um die erste Strebe (304) lösbar aufzunehmen;
eine zweite Aufnahmehalterung (326, 726), die ausgelegt ist, um die zweite Strebe (306) lösbar aufzunehmen;
eine dritte Aufnahmehalterung (328, 728), die ausgelegt ist, um die dritte Strebe (308) lösbar aufzunehmen;
**dadurch gekennzeichnet, dass** die Verbindungsschnittstelle eine vierte Aufnahmehalterung (322) umfasst, die ausgelegt ist, um an einem Rahmen (360) an einer unteren Verkleidung (234) des Drehflüglers (100) befestigt zu werden, und die ausgelegt ist, um die Befestigungsvorrichtung (312) lösbar aufzunehmen.

12. Verbindungsschnittstelle (275, 775) nach Anspruch 11, bei der die erste Aufnahmehalterung (324, 724) und die zweite Aufnahmehalterung (326, 726) konfiguriert sind, um an einer seitlichen Verkleidung (232) des Drehflüglers (100) befestigt zu werden, und die dritte Aufnahmehalterung (328, 728) konfiguriert ist, um an der unteren Verkleidung (234) des Drehflüglers (100) befestigt zu werden.

13. Verbindungsschnittstelle (275, 775) nach Anspruch 12, bei der die zweite Aufnahmehalterung (326) an der seitlichen Verkleidung (232) und die dritte Aufnahmehalterung (328, 728) an der unteren Verkleidung (234) so konfiguriert sind, dass sie einen Versatz (430) in Längsrichtung (x-Achse) des Drehflüglers (100) aufweisen.

14. Verbindungsschnittstelle (275, 775) nach einem der Ansprüche 12 oder 13, bei der die zweite Aufnahmehalterung (326, 726) konfiguriert ist, um an der seitlichen Verkleidung (232) des Drehflüglers (100) an derselben Längsposition (x-Achse) und an einer entgegengesetzten Querposition (y-Achse) wie die erste Aufnahmehalterung (324, 724) befestigt zu werden.

15. Bodenwartungssystem (250, 750), das die Bodenwartungsvorrichtung (200) nach einem der Ansprüche 1 bis 10 und die zur Befestigung an dem Drehflügler (100) ausgelegte Verbindungsschnittstelle (275, 775) nach einem der Ansprüche 11 bis 14 umfasst.

## Revendications

1. Dispositif (200) de service au sol pour maintenir les pales (112) de rotor d'un rotor (110) multipale d'un aéronef (100) à voilure tournante dans un mode de non-fonctionnement de l'aéronef (100) à voilure tournante, comprenant :
un châssis (210) qui est apte à être fixé de façon détachable sur des premier, deuxième, troisième et quatrième supports (322, 324, 326, 328, 724, 726, 728) d'accueil de l'aéronef (100) à voilure tournante et comprenant :
une base (340) de châssis,
une première entretoise (304) qui est fixée à pivotement sur la base (340) de châssis et qui est apte à permettre la fixation de façon détachable de la base (340) de châssis sur le premier support (324, 724) d'accueil,
une deuxième entretoise (306) qui est fixée à pivotement sur la base (340) de châssis et qui est apte à permettre la fixation de façon détachable de la base (340) de châssis sur le deuxième support (326, 726) d'accueil,
une troisième entretoise (308) qui est fixée à pivotement sur la base (340) de châssis et qui est apte à permettre la fixation de façon détachable de la base (340) de châssis sur le troisième support (328, 728) d'accueil, et
un dispositif (312) de fixation fixé de façon inamovible sur la base (340) de châssis qui est apte à permettre la fixation de façon détachable de la base (340) de châssis sur le quatrième support (322) d'accueil sous une coque (234) inférieure de l'aéronef (100) à voilure tournante ; et
des éléments (240) de serrage qui sont fixés sur le châssis (210) pour raccorder de façon détachable les pales (112) de rotor aux premier, deuxième, troisième et quatrième supports (322, 324, 326, 328, 724, 726, 728) d'accueil de l'aéronef (100) à voilure tournante de manière que les pales (112) de rotor soient maintenues dans le mode de non-fonctionnement de l'aéronef (100) à voilure tournante.

2. Dispositif (200) de service au sol selon la revendication 1, dans lequel un premier axe (504) d'entretoise est associé à la première entretoise (304), dans lequel le premier axe (504) d'entretoise s'écarte selon un premier angle (904) d'inclinaison d'entretoise de moins de 40 degrés par rapport à un premier axe (914), dans lequel le premier axe (914) est perpendiculaire à un plan qui est défini par la base (340) de châssis, dans lequel un deuxième axe (506) d'entretoise est associé à la deuxième entretoise (306), et dans lequel le deuxième axe (506) d'entretoise s'écarte selon un deuxième angle (906) d'inclinaison d'entretoise de moins de 40 degrés par rapport à un deuxième axe (916) qui est parallèle au premier axe (914).

3. Dispositif (200) de service au sol selon la revendication 2, dans lequel les premier et deuxième axes (504, 506) d'entretoise sont configurés pour être tangents aux coques latérales d'une poutre (130) de queue de l'aéronef (100) à voilure tournante lorsque les première et deuxième entretoises (304, 306) sont fixées respectivement sur les premier et deuxième supports (324, 326) d'accueil.

4. Dispositif (200) de service au sol selon l'une quelconque des revendications 2 ou 3, dans lequel un troisième axe (508) d'entretoise est associé à la troisième entretoise (308), et dans lequel le troisième axe (508) d'entretoise s'écarte selon un troisième angle (908) d'inclinaison d'entretoise de moins de 40 degrés par rapport à un troisième axe (918) qui est perpendiculaire au premier axe (914) et parallèle au plan qui est défini par la base (340) de châssis.

5. Dispositif (200) de service au sol selon la revendication 4, dans lequel le troisième axe (508) d'entretoise est configuré pour être tangent à une coque (234) inférieure d'une poutre (130) de queue de l'aéronef (100) à voilure tournante lorsque la troisième entretoise (308) est fixée sur le support (328) d'accueil.

6. Dispositif (200) de service au sol selon l'une quelconque des revendications précédentes, comprenant en outre :
des bras (220) de soutien qui raccordent les éléments (240) de serrage à la base (340) de châssis.

7. Dispositif (200) de service au sol selon la revendication 6, dans lequel la base (340) de châssis comprend en outre :
une poutre (330) principale ; et
des première et seconde poutres (332, 334) diagonales qui, ensemble avec la poutre (330) principale, forment un triangle.

8. Dispositif (200) de service au sol selon la revendication 7, dans lequel la base (340) de châssis comprend en outre :
des première et seconde poutres (336, 338) latérales qui raccordent les bras (220) de soutien à la poutre (330) principale.

9. Dispositif (200) de service au sol selon l'une quelconque des revendications 7 à 8, dans lequel le dispositif (312) de fixation est fixé de façon inamovible sur la base (340) de châssis à l'emplacement d'une intersection des première et seconde poutres (332, 334) diagonales.

10. Dispositif (200) de service au sol selon l'une quelconque des revendications précédentes, dans lequel la première entretoise (304), la deuxième entretoise (306), et la troisième entretoise (308) sont fixées à pivotement sur la base (340) de châssis au moyen d'au moins l'un parmi une articulation à rotule, un palier à rotule ou une articulation à cardan.

11. Interface (275, 775) de raccordement qui est apte à être montée sur un aéronef (100) à voilure tournante et à accueillir le dispositif (200) de service au sol selon l'une quelconque des revendications précédentes, comprenant :
un premier support (324, 724) d'accueil qui est apte à recevoir la première entretoise (304) de façon détachable ;
un deuxième support (326, 726) d'accueil qui est apte à recevoir la deuxième entretoise (306) de façon détachable ;
un troisième support (328, 728) d'accueil qui est apte à recevoir la troisième entretoise (308) de façon détachable ;
**caractérisée en ce que** l'interface de raccordement comprend un quatrième support (322) d'accueil qui est apte à être fixé sur un cadre (360) à l'emplacement d'une coque (234) inférieure de l'aéronef (100) à voilure tournante et est apte à accueillir de façon détachable le dispositif (312) de fixation.

12. Interface (275, 775) de raccordement selon la revendication 11, dans laquelle le premier support (324, 724) d'accueil et le deuxième support (326, 726) d'accueil sont configurés pour être fixés sur une coque (232) latérale de l'aéronef (100) à voilure tournante, et dans laquelle le troisième support (328, 728) d'accueil est configuré pour être fixé sur la coque (234) inférieure de l'aéronef (100) à voilure tournante.

13. Interface (275, 775) de raccordement selon la revendication 12, dans laquelle le deuxième support (326) d'accueil sur la coque (232) latérale et le troisième support (328, 728) d'accueil sur la coque (234) inférieure sont configurés pour présenter un décalage (430) dans une direction longitudinale (axe des x) de l'aéronef (100) à voilure tournante.

14. Interface (275, 775) de raccordement selon l'une quelconque des revendications 12 ou 13, dans laquelle le deuxième support (326, 726) d'accueil est configuré pour être fixé sur la coque (232) latérale de l'aéronef (100) à voilure tournante sur une même position longitudinale (axe des x) que le premier support (324, 724) d'accueil et sur une position latérale (axe des y) opposée à celui-ci.

15. Système (250, 750) de service au sol comprenant le dispositif (200) de service au sol selon l'une quelconque des revendications 1 à 10 et l'interface (275, 775) de raccordement qui est apte à être montée sur l'aéronef (100) à voilure tournante selon l'une quelconque des revendications 11 à 14.
